(19) Europäisches Patentamt
European Patent Office
Office européen des brevets

(11) Veröffentlichungsnummer: **0 588 208 A2**

(12) **EUROPÄISCHE PATENTANMELDUNG**

(21) Anmeldenummer: **93114316.8**

(22) Anmeldetag: **07.09.93**

(51) Int. Cl.[5]: **C08L 23/02**, C08F 10/00, C08F 4/642

(30) Priorität: **12.09.92 DE 4230530**

(43) Veröffentlichungstag der Anmeldung: **23.03.94 Patentblatt 94/12**

(84) Benannte Vertragsstaaten: **AT BE CH DE ES FR GB IT LI LU NL SE**

(71) Anmelder: **HOECHST AKTIENGESELLSCHAFT**
**Brüningstrasse 50**
**D-65929 Frankfurt am Main(DE)**

(72) Erfinder: **Winter, Andreas, Dr.**
**Taunusblick 10**
**D-61479 Glashütten/Taunus(DE)**
Erfinder: **Spaleck, Walter, Dr.**
**Sulzbacher Strasse 63**
**D-65835 Liederbach(DE)**
Erfinder: **Bachmann, Bernd, Dr.**
**Kreuzheck 4**
**D-65817 Eppstein/Taunus(DE)**

(54) **Polyolefin-Formmasse mit breitem Schmelzbereich, Verfahren zu ihrer Herstellung und ihre Verwendung.**

(57) Polyolefinformmassen, die im DSC-Spektrum einen breiten, bimodalen oder multimodalen Schmelzbereich aufweisen, wobei das Maximum des Schmelzbereichs zwischen 120 und 165 °C liegt, erhält man durch Polymerisation oder Copolymerisation von mindestens zwei Olefinen zu Polyolefinen mit unterschiedlichem Schmelzpunkt. Die Olefine haben die Formel $R^aCH = CHR^b$, und das Katalysatorsystem besteht aus einem Aluminoxan und mindestens zwei Übergangsmetallkomponenten der Formel I

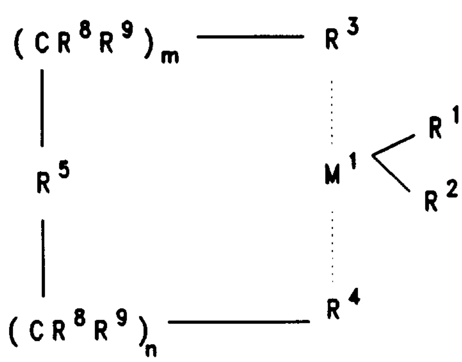

(I)

worin
$M^1$ Zr, Hf oder Ti bedeutet.

EP 0 588 208 A2

Mit Metallocen-Aluminoxan-Katalysatorsystemen können Polyolefine oder Polyolefincopolymere prinzipbedingt mit scharfem Schmelzpunkt hergestellt werden. Solche Produkte sind beispielsweise für Dünnwandspritzguß oder Präzisionsspritzguß sehr gut geeignet. Es ergeben sich dadurch sehr kleine Zykluszeiten pro Spritzteil.

Für eine Vielzahl von Anwendungen hingegen, wie etwa Tiefziehen, Blasformen, Extrusion, Spritz-Streck-Blasen oder für bestimmte Folienanwendungen ist ein Polyolefin mit einem solch scharfen Schmelz- und Kristallisationsbereich ungeeignet.

Beim Tiefziehen führt ein solches Produkt zu Verfahrensproblemen und beispielsweise zu Formteilen mit ungleichen Wanddicken. Bei Folienanwendungen ist beispielsweise eine Siegelung oder Verstreckung bei einem Produkt mit scharfem Schmelzpunkt problematisch. Gefordert wird für solche Anwendungen ein Polyolefin mit einem breiten Schmelzbereich.

Die Aufgabe bestand somit darin, nach einem Verfahren zu suchen, das es ermöglicht, Polyolefin-Formmassen mit breitem Schmelzbereich herzustellen. Gelöst wurde die Aufgabe durch Polymerisation oder Copolymerisation des Olefins oder der Olefine mit mindestens zwei verschiedenen Metallocenen.

Bei einer bestimmten Polymerisationstemperatur erzeugt aufgrund seiner Stereospezifität jeder Metallocenkatalysatortyp ein Polyolefin mit einem bestimmten Schmelzpunkt. Überraschend wurde nun gefunden, daß eine Mischung von mindestens zwei Metallocenen, die jeweils in ihren Schmelzpunkten stark unterschiedliche Polyolefine erzeugen, eine Polyolefinmischung erzeugen, die nicht wie erwartet einen Mischschmelzpunkt oder einen noch unter dem Schmelzpunkt der niedriger schmelzenden Komponente liegenden Schmelzpunkt aufweist, sondern daß ein Polymerprodukt erhalten wird, das zwei Schmelzpunkte besitzt. Der mittels DSC ("differential scanning calorimeter")-Spektrum ermittelte Schmelzbereich ist im direkten Vergleich mit den getrennten Polymeren deutlich verbreitert oder sogar bimodal, und das Produkt weist bei der Verarbeitung zu Formteilen die oben bereits diskutierten Vorteile auf.

Darüber hinaus wurde gefunden, daß das Mischen von Polyolefinen mit unterschiedlichen Schmelzpunkten beispielsweise durch Extrusion ebenfalls zu einem Produkt führt, das einen breiten bimodalen oder multimodalen Schmelzbereich aufweist.

Gegenstand der Erfindung ist somit die Herstellung einer Polyolefinformmasse mit folgenden Eigenschaften:

Die Formmasse weist im DSC-Spektrum einen breiten, bimodalen oder multimodalen Schmelzbereich auf. Das Maximum des Schmelzbereiches liegt zwischen 120 und 165 °C, die Halbwertsbreite des Schmelzpeaks ist breiter als 10 °C und die in Viertelpeakhöhe ermittelte Breite ist größer als 15 °C. Außerdem ist die Halbwertsbreite des Kristallisationspeaks größer als 4 °C und die in Viertelpeakhöhe ermittelte Breite beim Kristallisationspeak größer als 6 °C.

Durch fraktionierte Kristallisation oder durch Extraktion mit Kohlenwasserstoffen ist die Formmasse auftrennbar und die so erhaltenen Polyolefinanteile weisen schärfere Schmelz und Kristallisationspeaks auf.

Außer dem Polyolefin kann die erfindungsgemäße Formmasse noch die üblichen Zusatzstoffe enthalten, beispielsweise Nukleierungsmittel, Stabilisatoren, Antioxidanten, UV-Absorber, Lichtschutzmittel, Metalldesaktivatoren, Radikalfänger, Füllstoffe und Verstärkungsmittel, Compatibilizer, Weichmacher, Gleitmittel, Emulgatoren, Pigmente, optische Aufheller, Flammschutzmittel, Antistatika, Treibmittel.

Hergestellt wird diese erfindungsgemäße Polyolefinformmasse

a) durch Mischen von mindestens zwei, bevorzugt zwei oder drei Polyolefinen mit unterschiedlichem Schmelzpunkt. Die Schmelzpunkte von mindestens zwei der Polyolefine müssen dabei um mindestens 5 °C differieren. Das Mengenverhältnis der Polyolefine unterliegt keiner Beschränkung, gleiches gilt für die Molmassendispersität. Die Viskositätszahl soll über VZ = 10 $cm^3/g$ liegen, die Molmasse $M_w$ größer als 5000 g/mol sein. Das Mischen der Polymeren kann nach einer der in der Kunststoffverarbeitung üblichen Methoden erfolgen. Eine Möglichkeit ist das Sintern in einem schnellaufenden Mischer, wenn die zu mischenden Polymeren pulverförmig sind, eine weitere Möglichkeit ist der Einsatz eines Extruders mit Misch- und Knetorganen auf der Schnecke, oder es wird ein Kneter, wie er in der Gummi- und Kautschukindustrie verwendet wird, eingesetzt, oder

b) durch direkte Polymerisation von mindestens zwei, bevorzugt zwei oder drei Polyolefinen mit unterschiedlichem Schmelzpunkt. Die Schmelzpunkte von mindestens zwei der Polyolefine müssen dabei um mindestens 5 °C differieren. Das Mengenverhältnis der in der Polymerisation hergestellten Polyolefine unterliegt keiner Beschränkung.

Diese direkte Polymerisation der erfindungsgemäßen Polyolefinformmasse erfolgt durch Polymerisation oder Copolymerisation von Olefinen der Formel $R^aCH = CHR^b$, worin $R^a$ und $R^b$ gleich oder verschieden sind und ein Wasserstoffatom oder einen Alkylrest mit 1 bis 14 C-Atomen bedeuten, oder $R^a$ und $R^b$ mit

den sie verbindenden Atomen einen Ring bilden können, bei einer Temperatur von -60 bis 200 °C, bei einem Druck von 0,5 bis 100 bar, in Lösung, in Suspension oder in der Gasphase, in Gegenwart eines Katalysators, welcher aus mindestens zwei Übergangsmetallkomponenten (Metallocenen) und einem Aluminoxan der Formel II

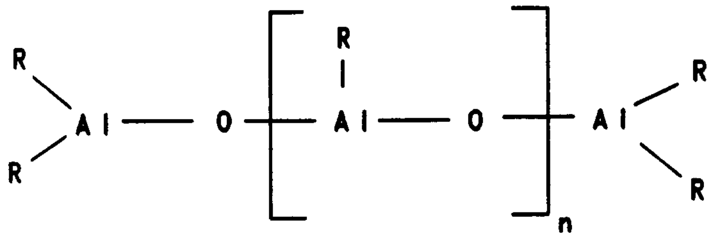

(II)

für den linearen Typ und/oder der Formel III

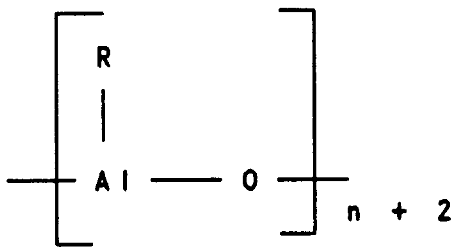

(III)

für den cyclischen Typ, wobei in den Formeln II und III die Reste R gleich oder verschieden sein können und eine $C_1$-$C_6$-Alkylgruppe, eine $C_1$-$C_6$-Fluoralkylgruppe, eine $C_6$-$C_{18}$-Arylgruppe, eine $C_6$-$C_{18}$-Fluorarylgruppe oder Wasserstoff bedeuten und n eine ganze Zahl von 0 bis 50 ist, oder besteht und die Aluminiumoxan-Komponente zusätzlich eine Verbindung der Formel $AlR_3$ enthalten kann,
wobei als Übergangsmetallkomponente mindestens zwei Metallocene der Formel I verwendet werden:

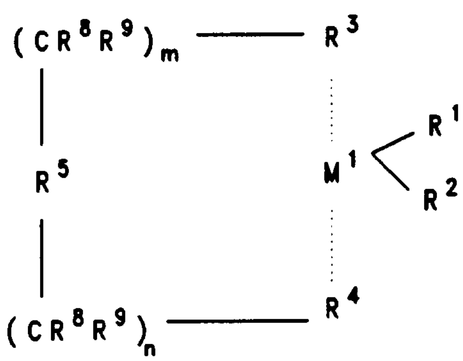

(I)

worin

$M^1$ Zr, Hf oder Ti bedeutet,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe,eine $C_7$-$C_{40}$-Alkylarylgruppe, eine $C_8$-$C_{40}$-Arylalkenylgruppe oder ein Halogenatom bedeuten,

$R^3$ und $R^4$ gleich oder verschieden sind, und einen ein- oder mehrkernigen, unsubstituierten oder substituierten Kohlenwasserstoffrest, welcher mit dem Metallatom $M^1$ eine Sandwichstruktur bilden kann, bedeuten,

$R^5$

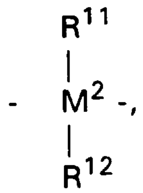 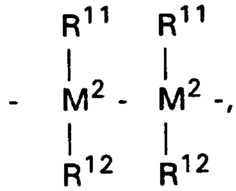 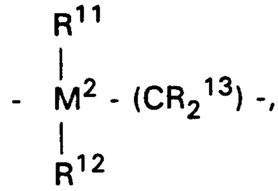 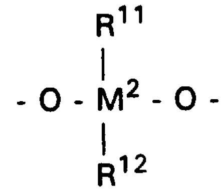

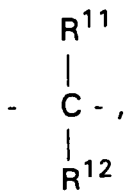 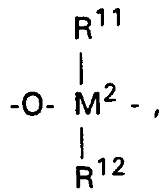

$=BR^{11}$, $=AlR^{11}$, -Ge-, -Sn-, -O-, -S-, $=SO$, $=SO_2$, $=NR^{11}$, $=CO$, $=PR^{11}$ oder $=P(O)R^{11}$ ist,
wobei

$R^{11}$, $R^{12}$ und $R^{13}$ gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden und
$M^2$ Silizium, Germanium oder Zinn ist,

$R^8$ und $R^9$ gleich oder verschieden sind und die für $R^{11}$ genannte Bedeutung haben,
m und n gleich oder verschieden sind und null, 1 oder 2 sind, wobei m plus n null, 1 oder 2 ist.

Alkyl steht für geradkettiges oder verzweigtes Alkyl. Halogen (halogeniert) bedeutet Fluor, Chlor, Brom oder Jod, bevorzugt Fluor oder Chlor.

$M^1$ ist Zr, Hf oder Ti, bevorzugt Zr und Hf,

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$ und $R^4$ sind gleiche oder verschiedene, ein- oder mehrkernige, unsubstituierte oder substituierte Kohlenwasserstoffreste, welche mit dem Metallatom $M^1$ eine Sandwichstruktur bilden können,

$R^5$ ist

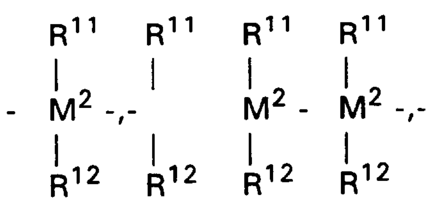 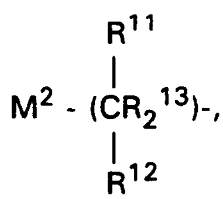 -O- $M^2$-O- ,

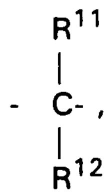 , 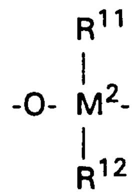

$=BR^{11}$, $=AlR^{11}$, -Ge-, -Sn-, -O-, -S-, $=SO$, $=SO_2$, $=NR^{11}$, $=CO$, $=PR^{11}$ oder $=P(O)R^{11}$, wobei $R^{11}$, $R^{12}$ und $R^{13}$ gleich oder verschieden sind und ein Wasserstoffatom, ein Halogenatom, eine $C_1$-$C_{10}$-, vorzugsweise $C_1$-$C_4$-Alkylgruppe, insbesondere Methylgruppe, eine $C_1$-$C_{10}$-Fluoralkylgruppe, vorzugsweise $CF_3$-Gruppe, eine $C_6$-$C_{10}$-, vorzugsweise $C_6$-$C_8$-Arylgruppe, eine $C_6$-$C_{10}$-Fluorarylgruppe, vorzugsweise Pentafluorphenylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe bedeuten, oder $R^{11}$ und $R^{12}$ oder $R^{11}$ und $R^{13}$ bilden jeweils zusammen mit den sie verbindenden Atomen einen Ring.

$M^2$ ist Silizium, Germanium oder Zinn, bevorzugt Silizium und Germanium.

$R^5$ ist vorzugsweise $=CR^{11}R^{12}$, $=SiR^{11}R^{12}$, $=GeR^{11}R^{12}$, -O-, -S-, $=SO$, $=PR^{11}$ oder $=P(O)R^{11}$.

$R^8$ und $R^9$ sind gleich oder verschieden und haben die für $R^{11}$ genannte Bedeutung.

m und n sind gleich oder verschieden und bedeuten null, 1 oder 2, bevorzugt null oder 1, wobei m plus n null, 1 oder 2, bevorzugt null oder 1 ist.

Somit sind die besonders bevorzugten Metallocene solche, bei denen $M^1$ Zirkon oder Hafnium ist, $R^1$ und $R^2$ gleich sind und Methyl oder Chlor bedeuten,

$R^4$ und $R^3$ Indenyl, Cyclopentadienyl oder Fluorenyl bedeuten, wobei diese Liganden noch zusätzliche Substituenten in der Bedeutung von $R^{11}$, $R^{12}$ und $R^{13}$ tragen können, wobei die Substituenten unterschiedlich sein können und durch sie verbindene Atome auch Ringe bilden können,

$R^5$ einen Rest

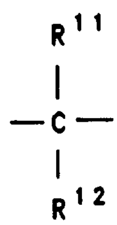 oder 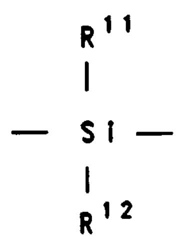

bedeutet und n plus m null oder 1 bedeuten, insbesondere die in den Ausführungsbeispielen aufgeführten Verbindungen.

Die chiralen Metallocene werden als Racemat zur Herstellung von hochisotaktischen Polyolefinen eingesetzt. Verwendet werden kann aber auch die reine R- oder S-Form. Mit diesen reinen stereoisomeren Formen ist ein optisch aktives Polymeres herstellbar. Abgetrennt werden kann jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochisotaktisches Polymeres erzeugen kann. Wird die meso-Form nicht abgetrennt, entsteht neben isotaktischen Polymeren auch ataktisches Polymer. Für bestimmte Anwendungen - weiche Formkörper beispielsweise - kann dies durchaus wünschenswert sein. Metallocene mit formaler $C_S$-Symmetrie sind zur Herstellung von syndiotaktischen Polyolefinen geeignet.

Die Trennung der Stereoisomeren ist im Prinzip bekannt.

Die Metallocene I können prinzipiell nach folgendem Reaktionsschema hergestellt werden:

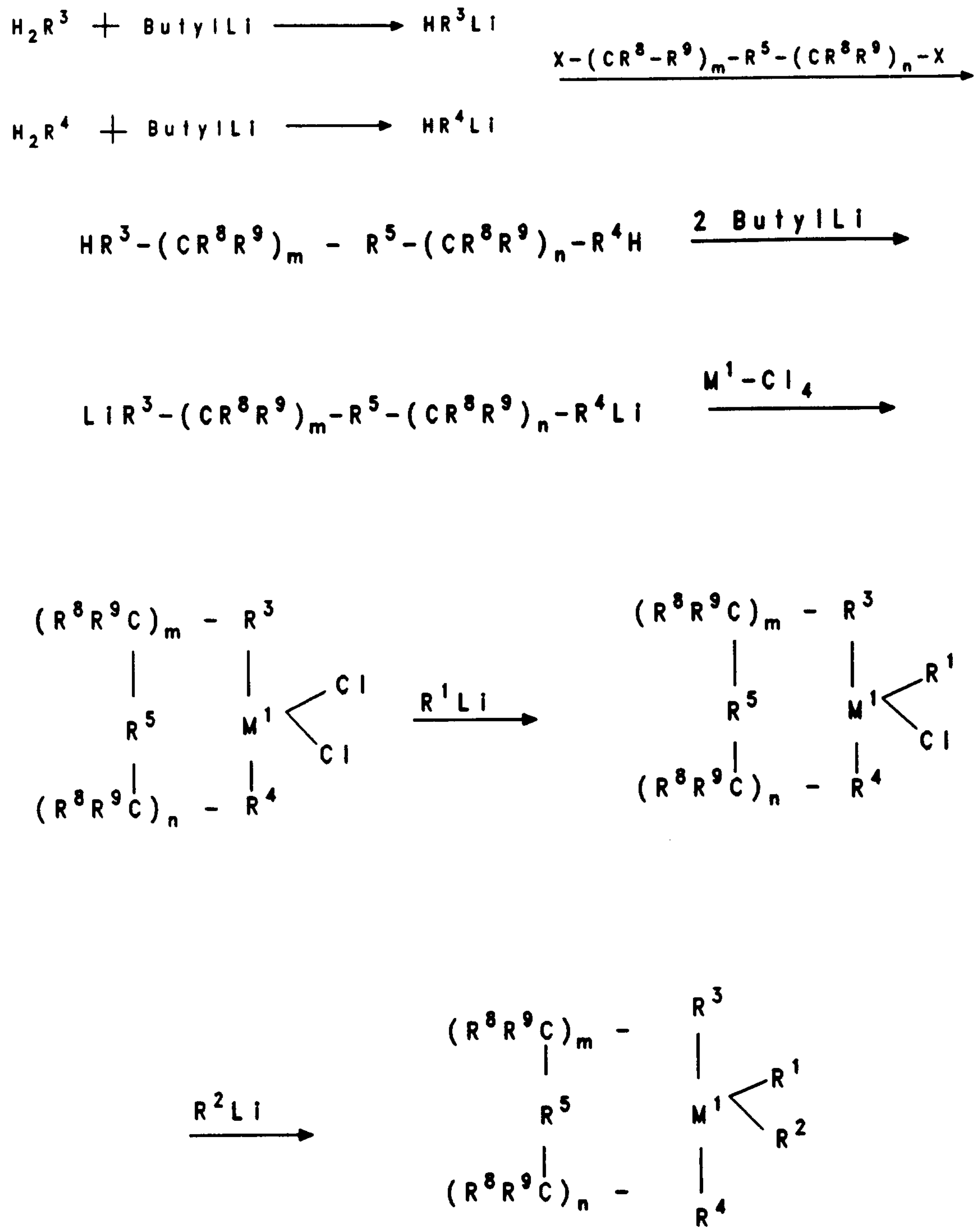


X = Cl, Br, I, O-Tosyl;

Die Herstellung der Metallocenverbindungen ist bekannt.

Die DSC-Messungen an der erfindungsgemäßen Polyolefinformmasse werden mit einer Aufheiz- bzw. Abkühlgeschwindigkeit von bevorzugt ≦ 20 ° C/min. durchgeführt.

Die Auswahl der Metallocene für die Polymerisation von Olefinen zu Polyolefinen mit breitem, bimodalem oder multimodalem Schmelzbereich kann durch jeweils eine Testpolymerisation pro Metallocen erfolgen.

Dabei wird das Olefin zum Polyolefin polymerisiert und dessen Schmelzkurve mittels DSC-Analytik bestimmt. Je nach gewünschtem Schmelzbereich bezüglich Schmelzbereichsmaximum und Schmelzbereichsbreite werden dann die Metallocene kombiniert.

Unter Einbezug der Polymerisationsaktivitäten ist man mittels Computersimulation der kombinierten DSC-Kurven in der Lage, über die Art der Metallocene und über das Mengenverhältnis der Metallocene untereinander, jeden gewünschten Schmelzkurventyp einzustellen.

Die Zahl der erfindungsgemäß in der Polymerisation zu verwendenden Metallocene I beträgt bevorzugt 2 oder 3, insbesondere 2. Es kann jedoch auch eine größere Anzahl (wie z.B. 4 oder 5) in beliebiger Kombination eingesetzt werden.

Unter Einbeziehung der Polymerisationsaktivitäten und Molmassen bei unterschiedlichen Polymerisationstemperaturen, in Gegenwart von Wasserstoff als Molmassenregler oder in Gegenwart von Comonomeren, kann das Rechensimulationsmodell noch weiter verfeinert und die Anwendbarkeit des erfindungsgemäßen Verfahrens noch verbessert werden.

Als Cokatalysator wird ein Aluminoxan der Formel II und/oder III verwendet, wobei n eine ganze Zahl von 0 - 50, bevorzugt 10 - 35, bedeutet.

Bevorzugt sind die Reste R gleich und bedeuten Methyl, Isobutyl, Phenyl oder Benzyl, besonders bevorzugt Methyl.

Sind die Reste R unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste R) enthalten sind. Statt des Aluminoxans kann bei der Polymerisation als Cokatalysator eine Mischung bestehend aus Aluminoxan und $AlR_3$ verwendet werden, wobei R die oben angeführte Bedeutung hat.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R werden entsprechend der gewünschten Zusammensetzung zwei verschiedene Aluminiumtrialkyle ($AlR_3$ + $AlR'_3$) mit Wasser umgesetzt (vgl. S. Pasynkiewicz, Polyhedron 9 (1990) 429 und EP-A 302 424).

Die genaue Struktur der Aluminoxane II und III ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocene vor dem Einsatz in der Polymerisationsreaktion jeweils getrennt oder zusammen als Mischung mit einem Aluminoxan der Formel (II) und/oder (III) vorzuaktivieren. Dadurch wird die Polymerisationsaktivität deutlich erhöht und die Kornmorphologie verbessert.

Die Voraktivierung der Metallocene wird in Lösung vorgenommen. Bevorzugt werden dabei die Metallocene als Feststoff in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol oder ein $C_6$-$C_{10}$-Kohlenwasserstoff verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Die Metallocene können in der gleichen Konzentration eingesetzt werden, vorzugsweise werden sie jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70 °C.

Die Metallocene können auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan, Kombinationen von Aluminoxan auf einem Träger wie beispielsweise Silikagel oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel $R_xNH_{4-x}BR'_4$ oder der Formel $R_3PHBR'_4$ als Cokatalysator verwendet. Dabei sind x = 1,2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt der Metallocene mit einer der genannten Verbindungen (vgl. EP-A 277 004).

Zur Entfernung von im Olefin vorhandener Katalysatorgifte ist eine Reinigung mit einem Aluminiumalkyl, beispielsweise $AlMe_3$ oder $AlEt_3$ vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Die Polymerisation oder Copolymerisation wird in bekannter Weise in Lösung, in Suspension oder in der Gasphase, kontinuierlich oder diskontinuierlich, ein- oder mehrstufig bei einer Temperatur von -60 bis

200 °C, vorzugsweise 20 bis 80 °C, durchgeführt. Polymerisiert oder copolymerisiert werden Olefine der Formel $R^a$-CH = CH-$R^b$. In dieser Formel sind $R^a$ und $R^b$ gleich oder verschieden und bedeuten ein Wasserstoffatom oder einen Alkylrest mit 1 bis 14 C-Atomen. $R^a$ und $R^b$ können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbornadien. Insbesondere werden Propylen und Ethylen polymerisiert.

Als Molmassenregler wird, falls erforderlich, Wasserstoff zugegeben.

Der Gesamtdruck im Polymerisationssystem beträgt 0,5 bis 100 bar. Bevorzugt ist die Polymerisation in dem technisch besonders interessanten Druckbereich von 5 bis 64 bar.

Dabei werden die Metallocene in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Lösemittel bzw. pro $dm^3$ Reaktorvolumen angewendet. Das Aluminiumoxan oder die Mischung Aluminoxan/$AlR_3$ wird in einer Konzentration von $10^{-5}$ bis $10^{-1}$ mol, vorzugsweise $10^{-4}$ bis $10^{-2}$ mol pro $dm^3$ Lösemittel bzw. pro $dm^3$ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff, als solcher sei beispielsweise Butan, Pentan, Hexan, Heptan, Decan, Isooctan, Cyclohexan, Methylcyclohexan, genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die beschriebenen Metallocene im technisch interessanten Temperaturbereich zwischen 20 und 80 °C mit hoher Polymerisationsaktivität Polymere mit breitem, bimodalem oder multimodalem Schmelzbereich erzeugen.

Die erfindungsgemäßen Polyolefin-Formmassen eignen sich besonders gut zur Herstellung von Formteilen durch Tiefziehen, Blasformen, Extrusion, Spritz-Streckblasen und für bestimmte Folienanwendungen wie Siegelung oder Verstreckung.

Die nachfolgenden Beispiele sollen die Erfindung näher erläutern.

Es bedeuten

VZ = Viskositätszahl in $cm^3$/g

$M_w$ = Molmassengewichtsmittel in g/mol } ermittelt durch
$M_w/M_n$ = Molmassendispersität } Gelpermeationschromatographie

MFI (230/5) = Schmelzindex, gemessen nach DIN 53735; 230 °C Schmelzetemperatur und 5 kg Belastungsgewicht.

Schmelzpunkte, Peakbreiten, Schmelzbereiche und Kristallisationstemperaturen wurden mit DSC-Spektrometrie bestimmt (20 °C/min Aufheiz-/Abkühlgeschwindigkeit).

Beispiel 1

Jeweils 5 kg zweier unterschiedlicher Polypropylenpulver wurden gemischt, mit 20 g Pentaerythrityl-tetrakis [3(3,5-di-t-butyl-4-hydroxy-phenyl)propionat] gegen chemischen Abbau unter Extrusionsbedingungen stabilisiert und in einem Doppelschneckenextruder ZSK 28 (Fa. Werner und Pfleiderer) extrudiert und anschließend granuliert. Die Temperaturen in den Heizzonen waren 150 °C (Einzug), 210 °C, 250 °C, 280 °C und 215 °C (Düsenplatte), die Massetemperatur im Extruder war 275 °C, die Extruderschnecken rotierten mit 250 Upm. Die für die Mischung verwendeten Basispolymeren hatten folgende Eigenschaften:

Polymer 1: VZ = 255 $cm^3$/g; MFI (230/5) = 6,8 dg/min; $M_w$ = 310 000 g/mol;
$M_w/M_n$ = 2,2; Schmelzpunkt (Maximum des Schmelzpeaks) 139 °C, Halbwertsbreite des Schmelzpeaks 5 °C, Breite in Viertelpeakhöhe 16 °C; Kristallisationspunkt 101 °C, Halbwertsbreite des Kristallisationspeaks 4,0 °C, Breite in Viertelpeakhöhe 5,5 °C.

Polymer 2: VZ = 235 $cm^3$/g; MFI (230/5) = 10 dg/min; $M_w$ = 277 000 g/mol;
$M_w/M_n$ = 2.3; Schmelzpunkt (Maximum des Schmelzpeaks) 152 °C, Halbwertsbreite des Schmelzpeaks 8 °C, Breite in Viertelpeakhöhe 12 °C; Kristallisationspunkt 105 °C, Halbwertsbreite des Kristallisationspeaks

6 °C, Breite in Viertelpeakhöhe 7,5 °C.

Die durch Extrusion hergestellte erfindungsgemäße Formmasse wies folgende Daten auf:
VZ = 257 $cm^3$/g; MFI (230/5) = 8,7 dg/min;
$M_w$ = 300 000 g/mol; $M_w/M_n$ = 2,8; Maximum des Schmelzbereichs bei 150 °C, Schulter bei 130 °C; Halbwertsbreite des Schmelzpeaks 19 °C, Breite in Viertelpeakhöhe 31 °C; Maximum des Kristallisationspeaks 105 °C; Halbwertsbreite des Kristallisationspeaks 8,5 °C, Breite in Viertelpeakhöhe 11,5 °C.

Beispiel 2

Beispiel 1 wurde wiederholt, es wurden jedoch zwei andere Polypropylenkomponenten verwendet und die Extruderparameter waren 130 °C (Einzug), 155 °C, 200 °C, 250 °C und 250 °C (Düsenplatte), Massetemperatur 225 °C, Drehzahl der Extruderschnecken 300 Upm.
Polymer 1: VZ = 155 $cm^3$/g; MFI (230/5) = 65 dg/min;
$M_w$ = 172 000 g/mol; $M_w/M_n$ = 2,8;
Schmelzpunkt (Maximum des Schmelzpeaks) 137 °C, Halbwertsbreite des Schmelzpeaks 10 °C, Breite in Viertelpeakhöhe 17 °C, Kristallisationspunkt 104 °C, Halbwertsbreite des Kristallisationspeaks 5 °C, Breite in Viertelpeakhöhe 7,5 °C.
Polymer 2: VZ = 156 $cm^3$/g; MFI (230/5) = 68 dg/min;
$M_w$ = 153 500 g/mol; $M_w/M_n$ = 2,1;
Schmelzpunkt (Maximum des Schmelzpeaks) 153 °C; Halbwertsbreite des Schmelzpeaks 7,5 °C, Breite in Viertelpeakhöhe 18,8 °C; Kristallisationspunkt 110 °C, Halbwertsbreite des Kristallisationspeaks 5 °C, Breite in Viertelpeakhöhe 7,5 °C.

Daraus hergestellte erfindungsgemäße Formmasse:
VZ = 158 $cm^3$/g; MFI (230/5) = 67 dg/min;
$M_w$ = 168 000 g/mol; $M_w/M_n$ = 2,6;
Maximum des Schmelzbereichs bei 148 °C, Schulter bei 138 °C, Halbwertsbreite 19 °C, in Viertelpeakhöhe 31 °C; Maximum des Kristallisationspeaks 112 °C, Halbwertsbreite 6 °C, in Viertelpeakhöhe 10,5 °C.

Beispiel 3

Beispiel 1 wurde wiederholt, es wurden jedoch zwei andere Polypropylenkomponenten verwendet und die Extruderparameter waren 150 °C (Einzug), 160 °C, 240 °C, 240 °C und 240 °C (Düsenplatte), Massetemperatur 250 °C, Drehzahl der Extruderschnecken 220 Upm. Polymer 1: VZ = 407 $cm^3$/g; MFI (230/5) = 1,9 dg/min;
$M_w$ = 488 000 g/mol; $M_w/M_n$ = 2,2; Schmelzpunkt (Maximum des Schmelzpeaks) 158 °C, Halbwertsbreite des Schmelzpeaks 8 °C, Breite in Viertelpeakhöhe 15 °C; Kristallisationspunkt 109 °C, Halbwertsbreite des Kristallisationspeaks 6.5 °C, Breite in Viertelpeakhöhe 9.5 °C.
Polymer 2: VZ = 132 $cm^3$/g; MFI (230/5) = 93 dg/min;
Schmelzpunkt (Maximum des Schmelzpeaks) 138 °C, Halbwertsbreite des Schmelzpeaks 7 °C, Breite in Viertelpeakhöhe 18 °C; Kristallisationspeak (Maximum) 99 °C, Halbwertsbreite 6,5 °C, Breite in Viertelpeakhöhe 8 °C.

Daraus hergestellte erfindungsgemäße Formmasse:
VZ = 247 $cm^3$/g; MFI (230/5) = 12,3 dg/min;
$M_w$ = 268 000 g/mol; $M_w/M_n$ = 3,0;
Maximum des Schmelzbereichs 154 °C, Schulter bei 141 °C, Halbwertsbreite 15 °C, Breite in Viertelpeakhöhe 29 °C; Kristallisation bei 114 °C.

Beispiel 4

Beispiel 3 wurde wiederholt, die dort verwendete Polymerkomponente 2 wurde jedoch durch ein Polypropylen mit folgenden Daten ersetzt:
VZ = 353 $cm^3$/g; MFI (230/5) = 2,1 dg/min;
$M_w$ = 465 500 g/mol; $M_w/M_n$ = 2,1;
Schmelzpunkt (Maximum des Schmelzpeaks) 153 °C, Halbwertsbreite des Schmelzpeaks 9,5 °C, Breite in Viertelpeakhöhe 13,5 °C; Kristallisationspunkt 110 °C, Halbwertsbreite des Kristallisationspeaks 7,5 °C, Breite in Viertelpeakhöhe 9 °C,
Daraus hergestellte erfindungsgemäße Formmasse:
VZ = 366 $cm^3$/g; MFI (230/5) = 1,9 dg/min;

$M_w$ = 486 500 g/mol; $M_w/M_n$ = 2,1;
Doppelmaximum des Schmelzbereichs bei 157 und 159 °C, Halbwertsbreite 17,5 °C, Breite in Viertelpeakhöhe 29 °C; Kristallisation bei 115 °C, Breite in Viertelpeakhöhe 11 °C.

Beispiel 5

Es wurde verfahren wie in Beispiel 1, es wurden jedoch 5 kg Polymer 1 von Beispiel 3 und 10 kg Polymer 1 von Beispiel 1 verwendet. Die Extruderparameter waren 150 °C (Einzug) 160 °C, 250 °C, 250 °C und 240 °C (Düsenplatte), Massetemperatur 255 °C, Drehzahl der Extruderschnecke 190 Upm.

Die erfindungsgemäße Formmasse, hergestellt aus diesen beiden Polymerkomponenten wies folgende Daten auf:
VZ = 302 $cm^3/g$; MFI (230/5) = 4,2 dg/min;
$M_w$ = 366 500 g/mol; $M_w/M_n$ = 2,5;
Maximum des Schmelzbereichs 151 °C, Halbwertsbreite 18 °C, Breite in Viertelpeakhöhe 34,5 °C, Kristallisation bei 106 °C mit einer Signalhalbwertsbreite von 7,5 °C und einer Breite in Viertelpeakhöhe von 10,5 °C.

Beispiel 6

Ein trockener, 150 $dm^3$-Reaktor wurde mit Propylen gespült und bei 20 °C mit 80 $dm^3$ eines entaromatisierten Benzinschnitts mit dem Siedebereich 100-120 °C, 50 $dm^3$ flüssigem Propylen und 150 $cm^3$ toluolischer Methylaluminoxanlösung (entsprechend 250 mmol Al, Molmasse nach hygroskopischer Bestimmung 1050 g/mol) befüllt. Die Temperatur wurde dann auf 40 °C einreguliert. Im Gasraum wurde ein Wasserstoffgehalt von 0,05 Vol.-% eingestellt (während der Polymerisation wird der Gehalt durch laufendes Nachdosieren von Wasserstoff konstant gehalten). 7,5 mg rac-$Me_2Si$(2-methyl-1-indenyl)$_2ZrCl_2$ und 45 mg rac-$Me_2Si$(indenyl)$_2HfCl_2$ wurden gemischt und der Feststoff in 25 $cm^3$ toluolischer Methylaluminoxanlösung
(42 mmol Al) gelöst und nach 15 Minuten in den Reaktor gegeben. Durch Kühlung wurde das Polymerisationssystem 24 h bei 43 °C gehalten. Die Polymerisation wurde durch Zugabe von 2,5 bar $CO_2$-Gas gestoppt und das gebildete Polymer (22,6 kg) auf einer Drucknutsche vom Suspensionsmedium abgetrennt. Die Trocknung des Produktes erfolgte 24 h bei 80 °C/200 mbar. Das Polymerpulver wurde mit 50 g Pentaerythrityltetrakis [3-(3,5-di-t-butyl-4-hydroxyphenyl)-proprionat] gegen chemischen Abbau versetzt und in einem Doppelschneckenextruder ZSK 28 (Fa. Werner und Pfleiderer) extrudiert und dann granuliert. Die Temperaturen in den Heizzonen waren 150 °C (Einzug), 200 °C, 240 °C, 250 °C (Düsenplatte), die Drehzahl der Extruderschnecken war 200 Upm, die Massetemperatur war 250 °C.

Die erfindungsgemäße Formmasse wies folgende Daten auf:
VZ = 285 $cm^3/g$; MFI (230/5) = 5,4 dg/min;
$M_w$ = 334 500 g/mol; $M_w/M_n$ = 2,2; Maximum des Schmelzbereichs bei 152 °C, Schulter bei 132 °C, Halbwertsbreite des Schmelzpeaks 17,5 °C, Breite in Viertelpeakhöhe 35 °C; Maximum des Kristallisationspeaks 106 °C; Halbwertsbreite des Kristallisationspeaks 8,5 °C, Breite in Viertelpeakhöhe 12,5 °C.

Beispiel 7

Beispiel 6 wurde wiederholt, als Metallocene wurden jedoch 7,5 mg Phenyl(Methyl)Si(2-methyl-1-indenyl)$_2ZrCl_2$ und 2,5 mg $Me_2Si$(2-methyl-4-phenyl-1-indenyl)$_2ZrCl_2$ verwendet, die Polymerisationstemperatur war 48 °C und im Gasraum wurde ein Wasserstoffgehalt von 2,5 Vol.-% eingestellt. Es wurden 21,5 kg Polymer erhalten. Die nach Extrusion und Granulierung erhaltene Formmasse hatte folgende Eigenschaften:
VZ = 194 $cm^3/g$; MFI (230/5) = 28,8 dg/min; $M_w$ = 238 000 g/mol;
$M_w/M_n$ = 2,8; Maximum des Schmelzbereichs bei 157 °C, Halbwertsbreite 13,5 °C, Breite in Viertelpeakhöhe 24 °C; Maximum des Kristallisationspeaks 115 °C, Halbwertsbreite 6,5 °C, Breite in Viertelpeakhöhe 9,5 °C.

Durch fraktionierte Kristallisation wurde die Formmasse halbquantitativ in zwei Bestandteile aufgetrennt.
Polymer 1 lag zu etwa 45 Gew.-% vor und wies folgende Daten auf:
VZ = 179 $cm^3/g$; MFI (230/5) = 34 dg/min;
$M_w$ = 195 000 g/mol; $M_w/M_n$ = 2,1; Schmelzpunkt (Maximum des Schmelzpeaks) 151 °C, Halbwertsbreite 8,5 °C, Kristallisationspeak 111 °C, Halbwertsbreite 4 °C.
Polymer 2 lag zu etwa 55 Gew.-% vor und wies folgende Daten auf:
VZ = 207 $cm^3/g$; MFI (230/5) = 27 dg/min;

$M_w$ = 259 000 g/mol; $M_w/M_n$ = 2,5; Schmelzpunkt (Maximum des Schmelzpeaks) 159 °C, Halbwertsbreite 5 °C, Breite in Viertelpeakhöhe 12,5 °C; Kristallisationspeak bei 117 °C, Halbwertsbreite 2,5 °C und Breite in Viertelpeakhöhe 5 °C.

Beispiel 8

Beispiel 6 wurde wiederholt, die Polymerisationstemperatur war 50 °C, der Wasserstoffgehalt im Gasraum war 2,5 Vol.-% und als Metallocene wurden 2,5 mg $Me_2Si$(2-methyl-4-phenyl-1-indenyl)$_2ZrCl_2$ und 95 mg Phenyl(Methyl)Silyl(indenyl)$_2HfCl_2$ verwendet. Es wurden 18,5 kg Polymer erhalten. Die extrudierte Formmasse wies folgende Daten auf:
VZ = 166 $cm^3$/g; MFI (230/5) = 45,8 dg/min; $M_w$ 232 000 g/mol;
$M_w/M_n$ = 3,3; Maximum des Schmelzbereichs 156 °C, Schulter bei 140 °C, Halbwertsbreite 13 °C, Breite in Viertelpeakhöhe 30 °C; Maximum des Kristallisationspeaks 115 °C, Breite in Viertelpeakhöhe 8 °C.

Durch fraktionierte Kristallisation wurde die Formmasse halbquantitativ in zwei Bestandteile aufgeteilt. Polymer 1 lag zu etwa 60 Gew.-% vor und zeigte folgende Eigenschaften:
VZ = 132 $cm^3$/g; MFI (230/5) = 98 dg/min;
$M_w$ = 146 000 g/mol; $M_w/M_n$ = 2,2; Schmelzpunkt 137 °C, Halbwertsbreite 7,5 °C; Kristallisationspunkt 99 °C, Halbwertsbreite 6,5 °C.
Polymer 2 lag zu etwa 40 Gew.-% vor und zeigte folgende Daten:
VZ = 227 $cm^3$/g; MFI (230/5) = 23 dg/min;
$M_w$ = 265 500 g/mol; $M_w/M_n$ = 2,0; Schmelzpunkt 160 °C, Halbwertsbreite 5,5 °C, Breite in Viertelpeakhöhe 6 °C, Kristallisationspeak 118 °C, Halbwertsbreite 3,5 °C, Breite in Viertelpeakhöhe 5 °C.

Beispiel 9

Beispiel 6 wurde wiederholt, die Polymerisationstemperatur war 50 °C, der Wasserstoffgehalt im Gasraum war 1,2 Vol.-% und als Metallocene wurden 7,5 mg $Me_2Si$(2-methyl-1-indenyl)$_2ZrCl_2$ und 80 mg $Me_2Si$(indenyl)$_2HfCl_2$ verwendet. Es wurden 22,5 kg Polymer erhalten, und die extrudierte Formmasse wies folgende Daten auf:
VZ = 130 $cm^3$/g; MFI (230/5) = 110 dg/min;
$M_w$ = 142 500 g/mol; $M_w/M_n$ = 2,0; Maximum des Schmelzbereichs 149,5 °C, Schulter bei 137 °C, Halbwertsbreite 15,5 °C, Breite in Viertelpeakhöhe 27,5 °C; Maximum des Kristallisationspeaks 112 °C, Halbwertsbreite 7,5 °C.

Durch fraktionierte Kristallisation wurde die Formmasse halbquantitativ in zwei unterschiedliche Bestandteile im Verhältnis von etwa 50 : 50 Gew.-% aufgeteilt. Davon hatte Polymer 1 folgende Daten:
VZ = 130 $cm^3$/g; MFI (230/5) = 114 dg/min;
$M_w$ = 135 000 g/mol; $M_w/M_n$ = 1,9; Schmelzpunkt 151 °C Halbwertsbreite 8,5 °C, Kristallisationspeak 109 °C, Halbwertsbreite 5,5 °C.
Polymer 2 wurde folgendermaßen charakterisiert:
VZ = 136 $cm^3$/g; MFI (230/5) = 100 dg/min;
$M_w$ = 142 500 g/mol; $M_w/M_n$ = 2,2; Schmelzpunkt 135 °C, Halbwertsbreite 7 °C; Kristallisationspeak 97 °C, Halbwertsbreite 6,5 °C.

Beispiel 10

Es wurde verfahren wie in Beispiel 7, das Verhältnis der beiden verwendeten Metallocene wurde jedoch von 7,5 mg/2,5 mg auf 10,4 mg/1 ,8 mg geändert.

Die nach Extrusion erhaltene Formmasse hatte folgende Eigenschaften:
VZ = 192 $cm^3$/g; MFI (230/5) = 30,4 dg/min;
$M_w$ = 241 500 g/mol; $M_w/M_n$ = 2,3; Maximum des Schmelzbereichs bei 155 °C, Halbwertsbreite 12 °C, Breite in Viertelpeakhöhe 22,5 °C, Kristallisation bei 113 °C.

Beispiel 11

Es wurde verfahren wie in Beispiel 7, das Verhältnis der beiden verwendeten Metallocene wurde jedoch von 7,5 mg/2,5 mg auf 3,9 mg/5,2 mg geändert.

Die nach Extrusion erhaltene Formmasse hatte folgende Eigenschaften:
VZ = 197 $cm^3$/g; MFI (230/5) = 28,9 dg/min;

$M_w$ = 214 000 g/mol; $M_w/M_n$ = 2,5; Maximum des Schmelzbereichs 158 °C, Breite in Viertelpeakhöhe 24 °C, Kristallisation bei 116 °C.

Beispiel 12

Es wurde verfahren wie in Beispiel 8, das Verhältnis der beiden verwendeten Metallocene wurde jedoch von 2,5 mg/95 mg auf 1,5 mg/125 mg geändert.

Die nach Extrusion untersuchte Formmasse wies folgende Eigenschaften auf:
VZ = 162 $cm^3$/g; MFI (230/5) = 62 dg/min; $M_w$ = 198 000 g/mol;
$M_w/M_n$ = 2,7; Maximum des Schmelzbereichs 151 °C, Schulter bei 135 °C, Halbwertsbreite 16 °C, Breite in Viertelpeakhöhe 32,5 °C, Kristallisation bei 114 °C.

Beispiel 13

Es wurde verfahren wie in Beispiel 8, das Verhältnis der beiden verwendeten Metallocene wurde jedoch von 2,5 mg/95 mg auf 3,6 mg/51,5 mg geändert.

Die nach Extrusion untersuchte Formmasse wies folgende Eigenschaften auf:
VZ = 187 $cm^3$/g; MFI (230/5) = 37,1 dg/min;
$M_w$ = 209 500 g/mol; $M_w/M_n$ = 2,9; Maximum des Schmelzbereichs 157 °C, Breite in Viertelpeakhöhe 27,5 °C, Kristallisation bei 116 °C.

Beispiel 14

Ein trockener 24 $dm^3$-Reaktor wurde mit Propylen gespült, mit 10 $Ndm^3$ Wasserstoff, mit 12 $dm^3$ flüssigem Propylen und 32 $cm^3$ toluolischer Methylaluminoxanlösung (entsprechend 52 mmol Al, mittlerer Oligomerisierungsgrad war n = 21) befüllt. Der Inhalt wurde bei 30 °C 15 Minuten mit 250 Upm gerührt.

Parallel dazu wurden 6,2 mg rac-Ethylen (2-methyl-1-indenyl)$_2$$ZrCl_2$ und 1,0 mg rac-$Me_2$Si(2-methyl-4-phenyl-1 -indenyl)$_2$$ZrCl_2$ in 12 $cm^3$ toluolischer Methylaluminoxanlösung (20 mmol Al) gelöst und durch 15 minütiges Stehenlassen voraktiviert. Die Lösung wurde in den Reaktor gegeben und es wurde 1 h bei 60 °C polymerisiert. Es wurden 2,05 kg Polypropylen erhalten. Die durch Extrusion hergestellte Formmasse wies folgende Daten auf:
VZ = 285 $cm^3$/g; MFI (230/5) = 7,5 dg/min;
$M_w$ = 395 000 g/mol, $M_w/M_n$ = 3,3; Maximum des Schmelzbereichs 159 °C, Schulter bei 151 °C, Halbwertsbreite 14 °C, Breite in Viertelpeakhöhe 30,5 °C, Kristallisation bei 116 °C.

Beispiel 15

Es wurde verfahren wie in Beispiel 14, es wurde jedoch kein Wasserstoff verwendet, die Polymerisationstemperatur war 70 °C und als Metallocene wurden 1,8 mg rac-Ethyliden(2-methyl-4,6-di-isopropyl-1-indenyl)$_2$$ZrCl_2$ und 2,5 mg rac-$Me_2$Si(2-methyl-4,5-benzoindenyl)$_2$$ZrCl_2$ verwendet. Es wurden 2,07 kg Polymerpulver erhalten. Die durch Extrusion hergestellte Formmasse wies folgende Daten auf:
VZ = 245 $cm^3$/g; MFI (230/5) = 8,5 dg/min;
$M_w$ = 296 500 g/mol; $M_w/M_n$ = 2,9; Maximum des Schmelzbereichs 145 °C, Halbwertsbreite 16,5 °C, Breite in Viertelpeakhöhe 25,5 °C, Kristallisation bei 109 °C.

Beispiel 16

Es wurde verfahren wie in Beispiel 15, als Metallocene wurden jedoch 5,0 mg Dimethylmethylen(9-fluorenyl)(cyclopentadienyl)$ZrCl_2$ und 5,0 mg Phenyl(Methyl)methylen(9-fluorenyl)(cyclopentadienyl)$ZrCl_2$ verwendet. Es wurden 1,63 kg Polypropylen erhalten, das nach Extrusion eine Formmasse mit folgenden Eigenschaften ergab:
VZ = 141 $cm^3$/g; MFI (230/5) = 32,5 dg/min;
$M_w$ = 125 500 g/mol, $M_w/M_n$ = 2,5; Maximum des Schmelzbereichs bei 125 und 132 °C, Halbwertsbreite 24,5 °C, Breite in Viertelpeakhöhe 41,5 °C; Kristallisation bei 57 °C und 75 °C, Halbwertsbreite 31,5 °C.

Beispiel 17

Ein trockener 24 $dm^3$-Reaktor wurde mit Propylen gespült und mit 9,5 $Ndm^3$ Wasserstoff und 12 $dm^3$ flüssigem Propylen befüllt. Dann wurden 35 $cm^3$ toluolische Methylaluminoxanlösung (entsprechend 52 mmol Al, mittlerer Oligomerisierungsgrad n = 20) zugegeben. Parallel dazu wurden 6,5 mg rac-Phenyl-(Methyl)silyl(2-methyl-4,6-diisopropyl-1-indenyl)$_2$ZrCl$_2$ in 13,5 $cm^3$ toluolischer Methylaluminoxanlösung (20 mmol Al) gelöst und durch 5-minütiges Stehenlassen voraktiviert.

Die Lösung wurde dann in den Reaktor gegeben und unter kontinuierlicher Zugabe von 60 g Ethylen wurde 1 h bei 60 °C polymerisiert. Es wurden 2,59 kg statistisches Copolymer erhalten. Der Ethylengehalt des Copolymers betrug 2,0 Gew.-%.

VZ = 503 $cm^3$/g; $M_w$ = 384 000 g/mol; $M_w/M_n$ = 2,0; Schmelzpunkt = 139 °C.

Eine zweite Polymerisation wurde in gleicher Weise, jedoch mit 5 $Ndm^3$ Wasserstoff und ohne Ethylenzugabe durchgeführt. Als Metallocen wurden 2,5 mg rac-Dimethylsilyl(2-methyl-4-phenyl-1-indenyl)-$_2$ZrCl$_2$ verwendet. Es wurden 1,71 kg Polypropylen erhalten.

VZ = 524 $cm^3$/g, $M_w$ = 448 000 g/mol, $M_w/M_n$ = 2,0; Schmelzpunkt = 162 °C.

Jeweils 1,5 kg der in den beiden Polymerisationen erhaltenen Polymeren wurden mit 6 g Pentaerythrityl-tetrakis[3(3,5-di-t-butyl-4-hydroxyphenyl)propionat] gegen chemischen Abbau unter Extrusionsbedingungen stabilisiert und in einem Doppelschneckenextruder ZSK 28 (Fa. Werner und Pfleiderer) extrudiert und anschließend granuliert. Die Temperaturen in den Heizzonen waren 150 °C (Einzug), 250 °C, 270 °C, 270 °C und 270 °C (Düsenplatte), die Massetemperatur war 285 °C, die Extruderschnecken rotierten mit 150 Upm.

Die so hergestellte Formmasse wies folgende Eigenschaften auf:

VZ = 548 $cm^3$/g; $M_w$ = 424 000 g/mol; $M_w/M_n$ = 2,5; Maximum des Schmelzbereichs 158 °C, Schulter bei 143 °C, Halbwertsbreite 19,5 °C, Breite in Viertelpeakhöhe 35,5 °C; Kristallisation bei 119 °C, Halbwertsbreite 11,5 °C.

Beispiel 18

Es wurde verfahren wie in Beispiel 14, als zweites Metallocen wurde jedoch statt rac-Me$_2$Si(2-methyl-4-phenyl-1-indenyl)$_2$ZrCl$_2$ die Verbindung Ph(Me)Si(2-methyl-4-phenyl-1-indenyl)$_2$ZrCl$_2$ verwendet.

Es wurden 1,95 kg Polypropylen erhalten. An der extrudierten Formmasse wurden folgende Daten ermittelt:

VZ = 325 $cm^3$/g; MFI (230/5) = 3,9 dg/min;

Maximum des Schmelzbereichs 160 ° C, Schulter bei 150 ° C, Halbwertsbreite 16 ° C, Breite in Viertelpeakhöhe 31 ° C, Kristallisation bei 114 ° C.

Beispiel 19

Es wurde verfahren wie in Beispiel 14, als zweites Metallocen wurde jedoch statt rac-Me$_2$Si(2-methyl-4-phenyl-1-indenyl)$_2$ZrCl$_2$ die Verbindung rac-Me$_2$Si(2-methyl-4-(1-naphthyl)-1-indenyl)$_2$ ZrCl$_2$ verwendet.

Es wurden 2,55 kg Polypropylen erhalten. An der extrudierten Formmasse wurden folgende Daten ermittelt:

VZ = 419 $cm^3$/g; MFI (230/5) = 0,9 dg/min; Maximum des Schmelzpeaks 162 ° C, Schulter bei 150 ° C, Halbwertsbreite 18 ° C, Breite in Viertelpeakhöhe 30 ° C, Kristallisation bei 110 ° C.

Beispiel 20

Es wurde verfahren wie in Beispiel 14, als Metallocene wurden jedoch 4,0 g mg rac-Me$_2$Si(2,5,6-trimethyl-1-indenyl)$_2$ZrCl$_2$ und 0,8 mg rac-Me$_2$Si(2-methyl-4-(1-naphthyl)-1-indenyl)$_2$ZrCl$_2$ verwendet. Es wurden 2,30 kg Polypropylen erhalten. An der extrudierten Formmase wurden folgende Daten ermittelt:

VZ = 379 $cm^3$/g; MFI (230/5) = 3,0 dg/min; Maximum des Schmelzpeaks 161 ° C, Schulter bei 137 °C, Halbwertsbreite 22 °C, Breite in Viertelpeakhöhe 35 ° C, Kristallisation bei 112 ° C.

Beispiel 21

Es wurde verfahren wie in Beispiel 14, als Metallocene wurden jedoch 3,0 mg rac-Me$_2$Si (4,5-benzo-1-indenyl)$_2$ ZrCl$_2$ und 0,8 mg rac-Me$_2$Si (2-methyl-4-(1-naphthyl)-1-indenyl)$_2$ ZrCl$_2$ verwendet. Es wurden 2,10 kg Polypropylen erhalten. An der extrudierten Formmasse wurden folgende Daten ermittelt:

VZ = 225 $cm^3$/g; MFI (230/5) = 23,5 dg/min; Maximum des Schmelzpeaks 161 ° C, Schulter bei 140 ° C, Halbwertsbreite 17 ° C, Breite in Viertelpeakhöhe 32 ° C, Kristallisation bei 111 ° C.

Beispiel 22

Es wurde verfahren wie in Beispiel 14, als Metallocene wurden jedoch 6,0 mg rac-$Me_2Si$(4-phenyl-1-indenyl)$_2ZrCl_2$ und 0,8 mg rac-$Me_2Si$(2-methyl-4-phenyl-1-indenyl)$_2ZrCl_2$ verwendet. Es wurden 2,23 kg Polypropylen erhalten. An der extrudierten Formmasse wurden folgende Daten ermittelt:
VZ = 220 $cm^3$/g; MFI (230/5) = 25 dg/min; Maximum des Schmelzpeaks 160° C, Schulter bei 149° C, Halbwertsbreite 15° C, Breite in Viertelpeakhöhe 30° C, Kristallisation bei 115° C.

Beispiel 23

Es wurde verfahren wie in Beispiel 22, zusätzlich wurde jedoch 70 Ethylen kontinuierlich während der einstündigen Polymerisationszeit in den Reaktor dosiert. Es wurden 2,35 kg Ethylen/Propylen-Copolymer erhalten.
VZ = 190 $cm^3$/g; MFI (230/5) = 45 dg/min; Maximum des Schmelzpeaks 148° C, Schulter bei 132° C, Halbwertsbreite 14° C. Das Copolymer enthielt 2,5 Gew.-% Ethylen in statistischer Verteilung.

Vergleichsbeispiel 1

Es wurde verfahren wie in Beispiel 1, es wurden jedoch folgende Polymere verwendet:
Polymer 1: VZ = 230 $cm^3$/g; MFI (230/5) = 15 dg/min, $M_w$ = 268 000 g/mol, $M_w/M_n$ = 2,0, Schmelzpunkt (Maximum) 157° C, Halbwertsbreite des Schmelzpeaks 7° C, Breite in Viertelpeakhöhe 10° C, Kristallisationspunkt 112° C.
Polymer 2: VZ = 235 $cm^3$/g; MFI (230/5) = 12 dg/min, $M_w$ = 272 000 g/mol, $M_w/M_n$ = 2,1, Schmelzpunkt (Maximum) 154° C, Halbwertsbreite des Schmelzpeaks 8° C, Breite in Viertelpeakhöhe 12° C, Kristallisationspunkt 109° C, Breite des Kristallisationspeaks (in Viertelpeakhöhe 5° C).

Vergleichsbeispiel 2:

Es wurde verfahren wie in Beispiel 1, es wurden jedoch folgende Polymere verwendet:
Polymer 1: VZ = 260 $cm^3$/g; MFI (230/5) = 5 dg/min, $M_w$ = 295 000 g/mol, $M_w/M_n$ = 2,3; Schmelzpunkt (Maximum) 149° C, Halbwertsbreite des Schmelzpeaks 6° C, Breite in Viertelpeakhöhe 13° C, Kristallisationspunkt 106° C.
Polymer 2: wie Polymer 2 in Beispiel 1
Die durch Extrusion hergestellte nicht erfindungsgemäße Formmasse wies folgende Daten auf:
VZ = 249 $cm^3$/g; MFI (230/5) = 8 dg/min; $M_w$ = 294 500 g/mol, $M_w/M_n$ = 2,6; Schmelzpunkt (Maximum) 151° C, Halbwertsbreite des Schmelzpeaks 8° C, Breite in Viertelpeakhöhe 12° C, Kristallisationspunkt 105° C.

Vergleichsbeispiel 3

Es wurde verfahren wie in Beispiel 1, es wurden jedoch folgende Polymere verwendet:
Polymer 1: wie Polymer 1 im Beispiel 1.
Polymer 2: VZ = 230 $cm^3$/g; MFI = 14 dg/min; $M_w$ = 274 500 g/mol, $M_w/M_n$ = 2,3 ; Schmelzpunkt (Maximum des Schmelzpeaks) 135° C, Halbwertsbreite des Schmelzpeaks 5,5° C, Breite in Viertelpeakhöhe 14° C, Kristallisationspunkt 102° C.
Die durch Extrusion hergestellte nicht erfindungsgemäße Formmasse wies folgende Daten auf:
VZ = 240 $cm^3$/g; MFI (230/5) = 12 dg/min; $M_w$ = 287 500 g/mol, $M_w/M_n$ = 2,4; Schmelzpunkt (Maximum) 137° C, Halbwertsbreite des Schmelzpeaks 5,5° C, Breite in Viertelpeakhöhe 14° C; Kristallisationspunkt 102° C, Halbwertsbreite des Kristallisationspeaks 4° C, Breite in Viertelpeakhöhe 5° C.

**Patentansprüche**

**1.** Polyolefinformmasse, die im DSC-Spektrum einen breiten, bimodalen oder multimodalen Schmelzbereich aufweist, wobei das Maximum des Schmelzbereichs zwischen 120 und 165°C, die Halbwertsbreite des Schmelzpeaks breiter als 10°C ist und die in Viertelpeakhöhe ermittelte Breite größer als 15° C ist.

2. Polyolefinformmasse gemäß Anspruch 1, dadurch gekennzeichnet, daß die Halbwertsbreite des Kristallisationspeaks größer als 4 °C ist und die in Viertelpeakhöhe ermittelte Breite beim Krstallisationspeak größer als 6 °C ist.

3. Polyolefinformmasse gemäß Anspruch 1 oder 2, dadurch gekennzeichnet, daß sie zusätzlich Nukleierungsmittel, Stabilisatoren, Antioxidantien, UV-Absorber, Lichtschutzmittel, Metalldesaktivatoren, Radikalfänger, Füllstoffe und Verstärkungsmittel, Compatibilizer, Weichmacher, Gleitmittel, Emulgatoren. Pigmente. optische Aufheller, Flammschutzmittel, Antistatika oder Treibmittel enthält.

4. Verfahren zur Herstellung der Polyolefinmasse gemäß einem oder mehreren der Ansprüche 1 bis 3, durch Mischen von mindestens zwei Polyolefinen mit unterschiedlichem Schmelzpunkt, wobei die Schmelzpunkte von mindestens zwei der Polyolefine mindestens 5 °C differieren müssen, die Viskositätszahlen über VZ = 10 $cm^3$/g liegen und die Molmassen $M_w$ größer als 5000 g/mol sind.

5. Verfahren zur Herstellung der Polyolefinformmasse gemäß einem oder mehreren der Ansprüche 1 bis 3, durch direkte Polymerisation oder Copolymerisation von mindestens zwei Polyolefinen mit unterschiedlichem Schmelzpunkt, wobei die Schmelzpunkte um mindestens 5 °C differieren müssen.

6. Verfahren gemäß Anspruch 5, dadurch gekennzeichnet, daß die Olefine die Formel $R^9CH = CHR^6$ haben, worin $R^9$ und $R^6$ gleich oder verschieden sind und ein Wasserstoffatom oder einen Alkylrest mit 1 bis 14 C-Atomen bedeuten, oder $R^a$ und $R^b$ mit den sie verbindenden Atomen einen Ring bilden können, bei einer Temperatur von -60 bis 200 °C, bei einem Druck von 0,5 bis 100 bar, in Lösung, in Suspension oder in der Gasphase, in Gegenwart eines Katalysators polymerisiert werden,
wobei der Katalysator aus mindestens zwei Übergangsmetallkomponenten (Metallocenen) und einem Aluminoxan der Formel II

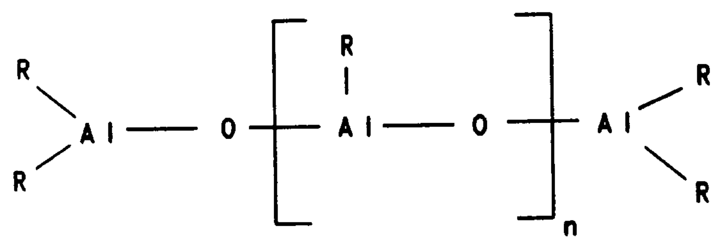

(II)

für den linearen Typ und/oder der Formel III

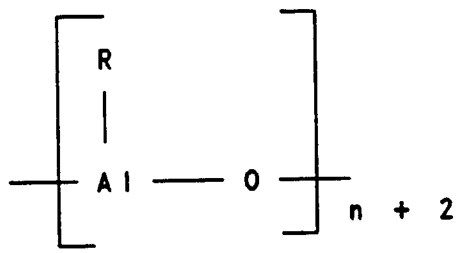

(III)

für den cyclischen Typ, wobei in den Formeln II und III die Reste R gleich oder verschieden sein können und eine $C_1$-$C_6$-Alkylgruppe, eine $C_1$-$C_6$-Fluoralkylgruppe, eine $C_6$-$C_{18}$-Arylgruppe, eine $C_6$-$C_{18}$-Fluorarylgruppe oder Wasserstoff bedeuten und n eine ganze Zahl von 0 bis 50 ist, besteht und zusätzlich eine Verbindung $AlR_3$ enthalten kann,
wobei als Übergangsmetallkomponente mindestens zwei Metallocene der Formel I verwendet werden:

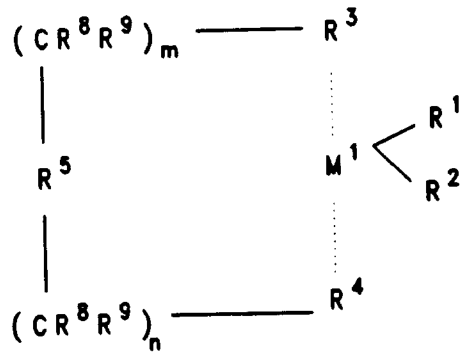

(I)

worin

$M^1$ Zr, Hf oder Ti bedeutet,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe` eine $C_2$-$C_{10}$-Alkenylgruppe` eine $C_7$-$C_{40}$-Arylalkylgruppe, eine $C_7$-$C_{40}$-Alkylarylgruppe` eine $C_8$-$C_{40}$-Arylalkenylgruppe oder ein Halogenatom bedeuten,

$R^3$ und $R^4$ gleich oder verschieden sind, und einen ein- oder mehrkernigen, unsubstituierten oder substituierten Kohlenwasserstoffrest, welcher mit dem Metallatom $M^1$ eine Sandwichstruktur bilden kann, bedeuten,

$R^5$

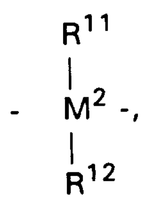 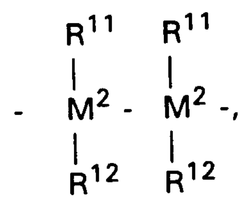 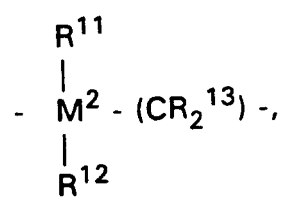 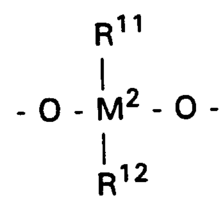

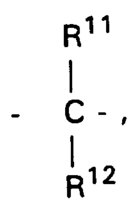 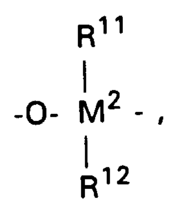

$=BR^{11}$, $=AlR^{11}$, -Ge-, -Sn-, -O-, -S-, $=SO$, $=SO_2$, $=NR^{11}$, $=CO$, $=PR^{11}$ oder $=P(O)R^{11}$ ist,

wobei

$R^{11}$, $R^{12}$ und $R^{13}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe` eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden und

$M^2$ Silizium, Germanium oder Zinn ist,

$R^8$ und $R^9$ gleich oder verschieden sind und die für $R^{11}$ genannte Bedeutung haben,

m und n gleich oder verschieden sind und null, 1 oder 2 sind, wobei m plus n null, 1 oder 2 ist.

**7.** Verfahren gemäß Anspruch 6, dadurch gekennzeichnet, daß

$M^1$ Zr oder Hf ist,

$R^1$ und $R^2$ gleich oder verschieden sind und ein Wasserstoffatom, eine

$C_1$-$C_3$-Alkylgruppe, eine $C_1$-$C_3$-Alkoxygruppe, eine $C_6$-$C_8$-Arylgruppe, eine $C_6$-$C_8$-Aryloxygruppe, eine $C_2$-$C_4$-Alkenylgruppe, eine $C_7$-$C_{10}$-Arylalkylgruppe, eine $C_7$-$C_{12}$-Alkylarylgruppe, eine $C_8$-$C_{12}$-Arylalkenylgruppe oder Chlor bedeuten,

$R^3$ und $R^4$ gleiche oder verschiedene, ein- oder mehrkernige, unsubstituierte oder substituierte Kohlenwasserstoffreste sind, welche mit dem Metallatom $M^1$ eine Sandwichstruktur bilden können,

$R^5$

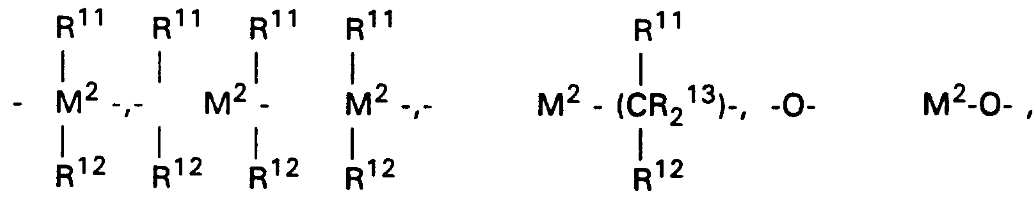

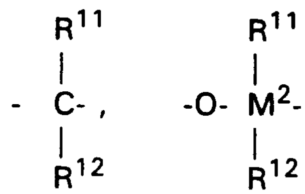

$=BR^{11}$, $=AlR^{11}$, -Ge-, -Sn-, -O-, -S-, $=SO$, $=SO_2$, $=NR^{11}$, $=CO$, $=PR^{11}$ oder $=P(O)R^{11}$ ist, wobei $R^{11}$, $R^{12}$ und $R^{13}$ gleich oder verschieden sind und ein Wasserstoffatom, ein Halogenatom, eine $C_1$-$C_4$-Alkylgruppe, eine $CF_3$-Gruppe, eine $C_6$-$C_8$-Arylgruppe, eine Pentafluorphenylgruppe, eine $C_1$-$C_4$-Alkoxygruppe, eine $C_2$-$C_4$-Alkenylgruppe, eine $C_7$-$C_{10}$-Arylalkylgruppe, eine $C_8$-$C_{12}$-Arylalkenylgruppe oder eine $C_7$-$C_{12}$-Alkylarylgruppe bedeuten, oder $R^{11}$ und $R^{12}$ oder $R^{11}$ und $R^{13}$ jeweils zusammen mit den sie verbindenden Atomen einen Ring bilden und

$M^2$ Silizium oder Germanium ist,

$R^8$ und $R^9$ gleich oder verschieden sind und die für $R^{11}$ genannte Bedeutung haben,

m und n gleich oder verschieden sind und null oder 1 bedeuten, wobei m plus n null oder 1 ist.

**8.** Verfahren gemäß Anspruch 6 oder 7, dadurch gekennzeichnet, daß

$M^1$ Zirkon oder Hafnium ist, $R^1$ und $R^2$ gleich sind und Methyl oder Chlor bedeuten,

$R^4$ und $R^3$ Indenyl, Cyclopentadienyl oder Fluorenyl bedeuten, wobei diese Liganden noch zusätzliche Substituenten in der Bedeutung von $R^{11}$, $R^{12}$ und $R^{13}$ tragen können, wobei die Substituenten unterschiedlich sein können und durch sie verbindene Atome auch Ringe bilden können,

$R^5$ einen Rest

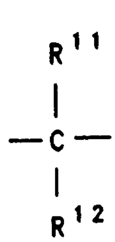

oder

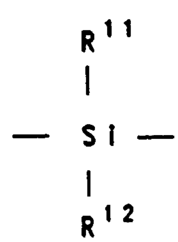

bedeutet und n plus m null oder 1 bedeuten.

**9.** Verwendung der Formmasse gemäß einem oder mehreren der Ansprüche 1 bis 3 zur Herstellung von Formkörpern.

**10.** Formkörper, herstellbar aus einer Formmasse gemaß einem oder mehreren der Ansprüche 1 bis 3.